**Europäisches Patentamt**

**European Patent Office**

**Office européen des brevets**

(19)

(11) Publication number: **0 202 620**
**B1**

# EUROPEAN PATENT SPECIFICATION

(12)

(45) Date of publication of patent specification: **16.08.89**

(51) Int. Cl.⁴: **E 04 B 1/66,** E 01 D 19/08

(21) Application number: **86106674.4**

(22) Date of filing: **15.05.86**

(54) Process for the waterproof working with the use of deposition layer including mesh reinforcing bar.

(30) Priority: **17.05.85 JP 103814/85**

(43) Date of publication of application:
**26.11.86 Bulletin 86/48**

(45) Publication of the grant of the patent:
**16.08.89 Bulletin 89/33**

(84) Designated Contracting States:
**DE FR**

(56) References cited:
**FR-A-2 282 018**
**FR-A-2 517 253**
**US-A-4 151 023**
**US-A-4 319 854**

(73) Proprietor: **Kabushiki Kaisha Toshonishiwaki**
**1-19-13, Nishikata Bunkyo-ku**
**Tokyo (JP)**

(72) Inventor: **Nishiwaki, Kokichi**
**3-26-1 Nishidai Itabashi-ku**
**Tokyo (JP)**

(74) Representative: **Klunker . Schmitt-Nilson .**
**Hirsch**
**Winzererstrasse 106**
**D-8000 München 40 (DE)**

Courier Press, Leamington Spa, England.

## Description

The invention relates to a process for waterproofing civil engineering structures such as buildings, roads and the like.

Generally, various waterproofs, for example asphalt waterproof, mortar waterproof, rubber sheet waterproof, urethane rubber-coating waterproof, acrylic rubber-coating waterproof and the like have been used in waterproofing.

Recently, an emulsion type-resin waterproof has been used since it can be safely handled in waterproofing but said asphalt waterproof can be used more advantageously than said emulsion waterproof, because of its excellent durability.

However, in the asphalt waterproof, the asphalt material is to be deposited in a thickness of about 5—10 mm, and onto the asphalt material a press concrete layer (thickness: about 100—200 mm) and a protect mortar layer (thickness: about 40—50 mm) usually have to be deposited to obtain waterproofness.

When the asphalt layer is not protected by the press concrete layer and the protect mortar layer, it will be degraded by external factors such as direct rays of the sun, which reduces the life-time of the waterproof.

Moreover, said multilayer structure is very thick to the extent of about 100—200 mm, so that they are of heavy weight, for example more than 250—500 Kg per m$^2$.

In accordance with the pre-characterizing part of claim 1, US—A—4,151,025 discloses a process for waterproofing civil engineering structures in which a membrane layer is deposited on a primer, a tack coat is deposited on said membrane as a further layer and a reinforcement mesh is inserted into said membrane layer.

The problem underlying the present invention is to provide a process for waterproofing civil engineering structures and the like, wherein the waterproofing layers withstand crazing and cracking without producing a rupture.

This problem is solved in accordance with the features contained in claim 1.

According to the invention there can be formed a complete waterproofness, the structure being prevented from flooding and leaking of water due to crazing, cracking, expansion and the like.

In one embodiment of the process according to the present invention, the rubber elastic cement layer comprising a mix of synthetic resin — or synthetic rubber — type emulsion and cement, and the mesh reinforcing bar layer can be integrally waterproofed through an underlying layer with the concrete base of the structure in a superposed construction.

The elastic mortar and/or polymer mortar layers are produced by mixing a mix of the synthetic resin-type and synthetic rubber-type emulsion and cement with aggregate and water, and these mortar layers can be integrally waterproofed together with the mesh reinforcing bar layer through the underlying layer on the concrete base in the superposed construction.

In a modified embodiment according to the present invention, a complex waterproof formed by depositing the mesh reinforcing bar layer on any combination of the waterproof material layers of the rubber elastic cement, elastic mortar and polymer mortar between any two of said layers of waterproof materials can be integrally waterproofed through the underlying layer with the concrete base in the superposed construction.

The terms "rubber elastic cement", "elastic mortar" and "polymer mortar" described herein mean a cement and mortar as an inorganic material having high waterproof properties and fastness properties by applying the rubber elastic properties and stretching properties to the inorganic material in which the synthetic resin- or synthetic rubber-type emulsion is mixed with the inorganic material. Also, "polymer mortar" means a product defined by JIS standard.

The rubber elastic cement used in the process according to the present invention can be easily produced by mixing intimately the synthetic emulsion and the cement in a ratio of 1:0.5—1:1, preferably 1:0.8—1:1 with the use of suitable mixer. When using said rubber elastic cement at low temperatures, then, in order to avoid crazing, a mixing amount of the emulsion is preferably added in some large amount, for example in a ratio of emulsion 1:cement 0.5—0.7. This increases the rubber resin content to compensate the decreasing of the elastic modulus caused by low temperatures.

The synthetic resin — or the synthetic rubber-type emulsion is an aqueous emulsion produced by dispersing intimately the synthetic resin or the synthetic rubber into substantial same amount or some excess amount of water. The synthetic resin — or synthetic rubber-type emulsion includes various kinds of emulsions such as for example acrylic-type synthetic resin emulsion, acrylic rubber emulsion, styrenebutadiene-type rubber emulsion, vinyl acetate- and ethyl acetate-type emulsion, chloropren-type rubber emulsion, asphalt emulsion, rubber-containing asphalt emulsion, polypropylene-type emulsion, urethane rubber-type emulsion, ethylene-vinyl chloride-type emulsion, epoxy resin-type emulsion, silicon rubber-type emulsion. Particularly, the acrylic-type synthetic resin emulsion is preferable as said emulsion. Thus, the present invention is explained mainly with regard to said emulsion, but this invention should not be limited thereby. Said acrylic-type synthetic resin emulsion includes, for example acrylic resin, methyl methacrylate-ethyl acrylate copolymer, methyl-methacrylate-butylacrylate copolymer, methylmethacrylate-2-ethylhexyl acrylate copolymer, methylmethacrylate-butadiene copolymer, styrene-ethylacrylate copolymer, styrene-butylacrylate copolymer and the like.

As described above, the synthetic resin emulsion can produce a rubber elastic cement having a consistency suitable in the waterproof working by mixing directly said emulsion with suitable amount of cement, since the emulsion itself includes a sufficient amount of water content. Thus, when producing the rubber elastic cement, the water content to be mixed can be regulated according to means for utilizing in the working, for example atomizing (or spraying) or spreading and the like.

According to the present invention, various kinds of cements can be used, for example Portland cement, high-early-strength cement, white cement, alumina cement, silica cement and the like, and gypsum, and particularly, the portland cement and white cement can be used preferably. In the use of the white cement, the rubber elastic cement, the elastic mortar and the polymer mortar, respectively can be colored to a desireable color by adding any pigment.

Furthermore, an accelerator for hydration reaction of the cement, a leveling agent, an anti-foam agent which are used conventionally can be added to said rubber elastic cement in a suitable amount, if necessary.

The elastic mortar and the polymer mortar described above can be easily obtained by mixing the rubber elastic cement with the aggregate and water and particularly, the polymer mortar can be obtained according to the blending defined in JIS standard. For example, in the working of a floor subjected to large loads, strength and wear characteristics must be in proportion to the load, so that the aggregate is mixed preferably in excess amount to the rubber elastic cement. For example, the aggregate can be mixed in an amount about 2—3 times the elastic cement blend (that is, about 200—300 weight parts). Whereas, in the waterproofing of a floor not subjected to large loads, a vessel (for example, water vessel), in the waterproof-antimoisture working of a storehouse or at low temperatures which will cause crazing, the aggregate can be mixed in a relatively small ratio to the elastic cement blend, for example in about 30—70 weight parts per 100 weight parts of said elastic cement blend.

As aggregate can be used various kinds of aggregate such as sand, silica sand, perlite, asbestos, glass fiber, calcium carbonate, rubber powder and the like.

When producing the elastic mortar, water is added in an amount suitable to the aggregate to obtain a consistency suitable to the waterproof working. For example, water can be added in an amount of about 30—60 weight parts based on total weight parts of the elastic cement blend and aggregate.

If necessary, to the elastic mortar can be added a curing accelerator such as aluminum chloride and aluminum hydride, a delaying agent such as sodium fluoride, sodium gluconic acid and acrylic acid, and a thickening agent such as methyl cellulose and polyisocyanate in an amount suitable to increase the waterproof working properties.

The above mentioned rubber elastic cement and elastic mortar can be produced easily by adding slowly the synthetic resin — or the synthetic rubber-emulsion into the above mentioned amount of cement while stirring with the use of a suitable mixer and mixing intimately these components. In this case, although the viscosity of the elastic mortar influences the blending amount of the aggregate, such viscosity can be preferably regulated in such a manner that water is added slowly little by little until a desired viscosity is obtained.

In the deposition, the mesh reinforcing bar is immersed and fixed partially into the cement or mortar material such that said cement or mortar is partially passed through the mesh of the reinforcing bar by the weight thereof and by applying suitable pressure. The reinforcing bar is fixed temporally on the concrete base and the primer by using a strong adhesion rubber tape material or a hot-melt instantaneous adhesive and then the cement or mortar waterproof material is deposited on the reinforcing bar to form a waterproof layer having the mesh reinforcing bar layer according to the present invention.

The reinforcing bar used in the present invention includes, for example, wire materials such as iron, zinc, galvanized iron, chrome, stainless steel, aluminum and the like. Particularly, in order to withstand stresses when crazed, the mesh reinforcing bar layer should have a strength of 6.9 MN/m$^2$ (70 kg/cm$^2$) at all and a strength of more than 49 N (5 kg) per one bar. Thus, the thickness of said bar is about 0.1—2 mm, preferably 0.2—0.6 mm and the width of the mesh is within a range of 1—10 mm. If the bar is very thin, a sufficient strength per one bar can not be obtained, so that a sufficient strength can not be applied to the waterproof layer. Whereas, in case that the bar is very thick, the strength increases, but the waterproof layer becomes thickner more than necessary for coating completely the mesh reinforcing bar and the waterproofing becomes expensive. Also, the width of meshes is preferably less than 5 mm, because when the width is more than 5 mm, the crazing is transmitted to an upper side layer portion of the waterproof layer through the meshes from the under side cement layer and the primer. The crazing will then be transited to a direction of the upper side layer. Also, in case that the width of the meshes is small, the waterproof materials of the upper layer cannot reach the lower cement layer and the primer through the meshes and thus a sufficient adhesion between the waterproof materials and the mesh reinforcing bar cannot be obtained.

The invention will now be described in greater detail with reference to the drawing in which

Fig. 1 shows a sectional view of waterproof layer deposited by the waterproofing according to the process of the present invention, and

Fig. 2 shows a sectional view of other waterproof layer construction deposited by changing the sequence of the deposition layer.

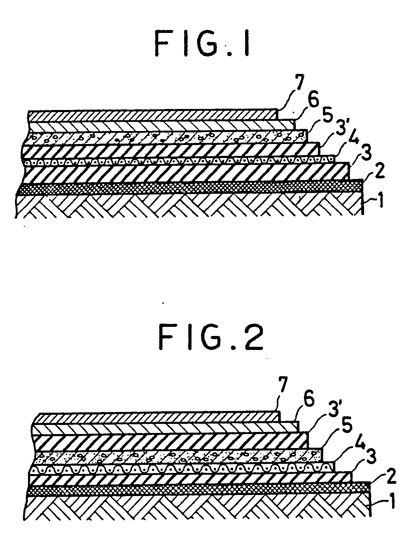

As shown in Fig. 1, a primer 2 is provided on a base 1 to be waterproofed of the structure. A rubber elastic cement layer 3 is applied on said coat 2 in a ratio of at least about 0.3—2 kg per 1 m² (thickness: about 0.5—1 mm), and then a mesh reinforcing bar layer 4 (for example, stainless mesh wire: diameter 0.5 mm and mesh width 2 mm) is arranged on said rubber elastic cement layer 3. In this case, the mesh reinforcing bar layer is either pressed temporally on the adjacent lower layer by a concrete nail, or is fixed by a tacky adhesion tape or a hot melt-type instantaneous adhesive. The nail is knocked at a suitable place of the mesh reinforcing bar layer. In addition to this, it can be pressed temporally by using a stapler, suitable adhesive mass, both surface adhesion tape and the like.

The same rubber elastic cement layer 3' is further deposited on the reinforcing bar layer 4 temporally pressed as shown in the above in a ratio of at least about 5.0—10 kg per 1 m² (thickness: about 3—6 mm). Then, the elastic mortar layer or the polymer mortar layer 5 is deposited on the layer 3' at least about 25 kg (thickness: about 1.5—3 mm) per 1 m².

By providing the mesh reinforcing bar layer 4 as mentioned above, the crazing risen in the underlying concrete base and the primer can be restrained from reaching the upper layer portion of the waterproof layer, while the reinforcing layer can apply mechanical strength to the waterproof layer itself and can also maintain the waterproof layer in uniform thickness.

The deposition of the waterproof materials of the rubber elastic cement, elastic mortar and polymer mortar can be carried out by using the conventional manner of either brush, roller, rubber spatula and the like, or airless spray, mortar gun and the like in spray painting.

After the waterproof material layer has been applied, said layer can be dried in the order of about 3—12 hours and usually about 3—6 hours depending on conditions such as backing, weather, humidity, temperature, moist, as well as mixing amount of aggregate and thickness of applied layer and the like.

If necessary, a finishing layer 6 comprising the same mortar as the layer 5 can be provided on the layer 5 and further a top coat 7 can be provided on the finished layer 6 having wear resistance and chemical resistance.

Furthermore, according to the present invention, the mesh reinforcing bar layer can be provided on the elastic mortar and the elastic mortar or polymer mortar layer 5 can be provided directly on the mesh reinforcing layer 4. As mentioned above, the order of deposition of each layer can be changed as shown in Fig. 2. However, in a preferable combination of the deposition layer, a first waterproof material layer can be arranged below the mesh reinforcing bar layer, and, in any other combination, the mesh reinforcing bar layer can be fixed directly over the cement and mortar layers to deposite the waterproof materials sufficiently within the meshes of the reinforcing layer to obtain a complete waterproof layer, and as the result, the resulting waterproof layer can be bonded strongly to the concrete structure.

Example 1

A) A rubber elastic cement used in this example was produced as follows:

About 60—100 by weight parts of water was intimately mixed with 100 by weight parts of acrylic resin by using suitably mixer while stirring to obtain an aqueous dispersed emulsion of acrylic resin.

Then, 100 and 70 by weight parts of portland cement, respectively, were mixed with 100 by weight parts of the emulsion such as obtained to produce two rubber elastic cements. From these rubber elastic cements were formed two cement plates having a thickness of 2.0 mm. Physical properties of these plates were determined, the results are shown in Table 1.

TABLE 1

| Mix (Wt. Parts) | | | Physical properties | Temp (°C) | | | | |
|---|---|---|---|---|---|---|---|---|
| No. | Resin | Cement | | 60 | 40 | 20 | 0 | −10 |
| 1 | 100 | 100 | Tensile strength (kgf/cm²) (1 kgf = 9.81 N) | 4 | 7 | 11 | 20 | 40 |
| | | | Extension (%) | 260 | 490 | 580 | 190 | 41 |
| 2 | 100 | 70 | Tensile strength (kgf/cm²) | — | 5 | 8 | 18 | 28 |
| | | | Extension (%) | — | 700 | 1080 | 660 | 150 |

A cement plate containing no acrylic resin (reference plate) has no substantial tensile strength, but the elastic cement according to the present invention has excellent physical properties.

Then, test pieces for cold-bend test were prepared by applying the rubber elastic cement (thickness: 10 mm) as above mentioned on a galvanized sheet iron (180 × 90 × 0.3 mm), and then bend tests (on 180° bend) with regard to these test pieces were carried out at 0°C and −20°C, respectively. No change in these test pieces according to the present invention was recognised.

4

B) An iron wire-metal mesh (diameter 0.5 mm and mesh width 1 mm) was deposited on a surface of the rubber elastic cement plate obtained in A) to prepare a waterproof layer comprising mesh reinforcing bar layer according to the present invention. Physical properties with regard to the waterproof layer thus formed were determined. The results are shown in Table 2.

TABLE 2

| Mix No. | Deposition component | | | | Tensile strength (kgf/cm²) | | Cold-bend (−20°C) |
|---|---|---|---|---|---|---|---|
| | Elastic cement (Wt. parts) | | Iron wire | | Deposited iron wire | No deposited iron wire | |
| | Resin | Cement | Thick. (mm) | Width (mm) | | | |
| 1 | 100 | 100 | 0.5 | 1.0 | 350 | 11 | No change |
| 2 | 100 | 70 | 1.0 | 2.0 | 500 | 8 | No change |

As shown in Table 2, the tensile strength of the waterproof layer including the iron wire as the mesh reinforcing bar was far higher than that of the layer not including the iron wire, and had an excellent extensibility. Thus, the waterproof layer formed by the waterproofing according to the present invention can withstand crazing of the concrete floor of the building.

Example 2

A) An elastic mortar was produced as follows:

100 and 30 weight parts, respectively of silica sand and 60 weight parts of water were mixed intimately in 100 weight parts of the rubber elastic cement corresponding to the mix No. 1 obtained in Example 1 while stirring.

Mortar plates (thickness 2.0 mm) were formed from the elastic mortar thus obtained and physical properties of these plates were determined. The results are shown in Table 3.

TABLE 3

| Mix (Wt. parts) | | | | Physical properties | Temp. (°C) | | | | |
|---|---|---|---|---|---|---|---|---|---|
| No. | Resin | Cement | Silica sand | | 60 | 40 | 20 | 0 | −10 |
| 1 | 100 | 100 | 100 | Tensile strength (kgf/cm²) | 7 | 9 | 16 | 36 | 76 |
| | | | | Extension (%) | 62 | 110 | 51 | — | — |
| 2 | 100 | 100 | 30 | Tensile strength (kgf/cm²) | 5 | 7 | 10 | 18 | 60 |
| | | | | Extension (%) | 180 | 370 | 290 | 95 | 31 |

As in example 1, the conventional mortar had no substantial tensile strength, whereas the elastic mortar according to the present invention had excellent physical properties.

B) An iron wire-metal mesh (diameter 1.5 mm and mesh width 1 mm) was deposited on a surface of the elastic mortar obtained in A) to prepare a waterproof layer comprising mesh reinforcing bar layer according to the present invention. Then, the physical properties of the waterproof layer thus formed were determined the same way as in Example 1 and as it was recognized that said waterproof layer had excellent mechanical properties, withstanding the crazing of the concrete floor.

Example 3

The waterproofing was carried out by using polymer mortar (JIS standard) instead of the elastic mortar obtained in example 2. The waterproof layer had the excellent physical properties as in example 2.

**Claims**

1. A process for waterproofing civil engineering structures (1) such as buildings, roads and the like, comprising the steps of:
   a) depositing on a primer (2) at least one substantially waterproof material layer (3, 3'),
   b) depositing on said waterproof material layer (3, 3') a further layer, and
   c) inserting a reinforcement mesh,
characterized in that,
   a1) said substantially waterproof material layer (3, 3') is a rubber elastic cement layer consisting of a mixture of synthetic resin- or synthetic rubber-emulsion and cement in a ratio of 1:0.5 to 1,
   b1) said further layer is an elastic mortar layer (5) produced by adding an aggregate and water to said mixture of step a1) and/or a polymer mortar layer, and
   c1) said reinforcement mesh is a mesh reinforcement bar layer (4) inserted between two adjacent of said layers (3, 3', 5).

2. The process of claim 1, wherein the material for said mesh reinforcement bar layer is selected from materials consisting of iron, chrome, stainless steel and aluminium.

3. The process of claims 1 or 2, wherein the mesh reinforcement bar layer has a mesh width within a range of 1—10 mm.

**Patentansprüche**

1. Verfahren zum Wasserdichtmachen ziviler Bauobjekte wie zum Beispiel Gebäude, Straßen oder dergleichen, umfassend die Schritte: ·
   a) auf eine Grundierung (2) wird zumindest eine im wesentlichen wasserdichte Materialschicht (3, 3') aufgebracht,
   b) es wird auf die wasserdichte Materialschicht (3, 3') eine weitere Schicht aufgebracht, und
   c) es wird eine Verstärkungs-Maschenstruktur eingebracht,
dadurch gekennzeichnet, daß
   a1) die im wesentlichen wasserdichte Materialschicht (3, 3') eine gummielastische Zementschicht ist, die aus einem Gemisch aus einer Kunstharz- oder Kunstgummi-Emulsion und Zement in einem Verhältnis von 1:0,5—1 besteht,
   b1) die weitere Schicht ist eine elastische Mörtelschicht (5), hergestellt durch Beigabe eines Zuschlagstoffs und Wasser zu dem Gemisch gemäß Schritt a1), und/oder eine Polymer-Mörtel-Schicht, und
   c1) die Verstärkungs-Maschenstruktur ist eine maschenförmige Verstärkungsstabschicht (4), die zwischen zwei benachbarte der Schichten (3, 3', 5) eingefügt ist.

2. Verfahren nach Anspruch 1, bei dem das Material für die maschenförmige Verstärkungsstangenschicht ausgewählt ist aus Materialien, die aus Eisen, Chrom, rostfreiem Stahl und Aluminium bestehen.

3. Verfahren nach Anspruch 1 oder 2, bei dem die maschenförmige Verstärkungsstangenschicht eine Maschenbreite in einem Bereich von 1—10 mm aufweist.

**Revendications**

1. Procédé d'étanchement à l'eau de structures (1) de génie civil telles que des bâtiments, des routes et similaires, comprenant les étapes suivantes:
   a) d'application sur une première couche (2) d'au moins une couche d'un matériau essentiellement étanche à l'eau (3, 3'),
   b) d'application sur ladite couche de matériau étanche à l'eau (3, 3') d'une couche supplémentaire, et
   c) d'insertion d'un treillis de renforcement,
caractérisé en ce que,
   a1) ladite couche de matériau essentiellement étanche à l'eau (3, 3') est une couche de ciment élastomère élastique consistant en un mélange d'émulsion de résine synthétique ou de caoutchouc synthétique et de ciment selon un rapport de 1:0,5 à 1,
   b1) ladite couche supplémentaire est une couche élastique de mortier (5) produite par addition d'un agrégat et d'eau audit mélange de l'étape a1) et/ou d'une couche de mortier polymère, et
   c1) ledit treillis de renforcement est une couche formant barrière de renforcement en treillis (4) insérée entre deux couches adjacentes desdites couches (3, 3', 5).

2. Le procédé selon la revendication 1, dans lequel le matériau pour ladite couche formant barrière de renforcement en treillis, est sélectionné parmi des matériaux comprenant le fer, le chrome, l'acier inoxydable et l'aluminium.

3. Le procédé selon les revendications 1 ou 2, dans lequel la couche formant barrière de renforcement en treillis présente une largeur de maille de l'ordre de 1 à 10 mm.

# FIG.1

# FIG.2